# EUROPEAN PATENT SPECIFICATION

(11) **EP 4 089 143 B1**
(45) Date of publication and mention of the grant of the patent: **23.07.2025**
(21) Application number: 21738034.4
(22) Date of filing: 05.01.2021
(51) Int. Cl.: C08L 11/02, C08K 5/37, C08K 3/22, C08F 136/18

(54) **LATEX COMPOSITION, MOLDED BODY AND METHOD FOR PRODUCING MOLDED BODY**
LATEXZUSAMMENSETZUNG, FORMKÖRPER UND VERFAHREN ZUR HERSTELLUNG EINES FORMKÖRPERS
COMPOSITION DE LATEX, CORPS MOULE ET PROCEDE DE PRODUCTION DE CORPS MOULE

(30) Priority: 06.01.2020 JP 2020000208
(43) Date of publication of application: 16.11.2022
(73) Proprietor: Resonac Corporation, Tokyo (JP)
(72) Inventor: SAGAE, Ichiro, Tokyo 105-8518 (JP); OGAWA, Noriko, Tokyo 105-8518 (JP)
(74) Representative: Strehl & Partner mbB
(86) International application number: PCT/JP2021/000052
(87) International publication number: WO 2021/141011

(56) References cited:
- EP-A1- 3 533 809
- CN-A- 104 804 245
- CN-A- 104 804 245
- JP-A- 2002 138 165
- JP-A- 2002 138 165
- JP-A- 2007 031 700
- JP-A- 2008 533 281
- JP-A- 2013 177 504
- JP-A- 2013 177 504
- US-A- 2 842 530

## Description

### Technical Field

The present invention relates to a latex composition, a molded body, and a method for producing a molded body.

### Background Art

Chloroprene polymer latex has good properties such as general rubber physical properties, weather resistance, heat resistance, and chemical resistance, and thus has been used for various applications. Chloroprene polymer latex has been widely used for, for example, dipped article application such as gloves, adhesive application, glue application, and civil engineering and construction applications such as elastic asphalt (modified asphalt) and elastic cement. Particularly disposable medical gloves such as surgical gloves produced using chloroprene polymer latex fit comfortably in the hand of users just as gloves made of natural rubber often making users feel a sense of fit (comfortableness) and also enabling them to follow delicate movements of users' fingers.

Chloroprene copolymer latex for producing a flexible molded body has been proposed as a related technology (e.g., Patent Literature 1).

US 2 842 530 A discloses a process for vulcanizing chloroprene by curing a composition comprising polychloroprene latices and monosodium salt of tetrachlorobenzene dithiol in various amounts.

### Citation List

### Patent Literature

Patent Literature 1
Japanese Patent Laid-Open No. 2019-143002

### Summary of Invention

### Technical Problem

Crosslinking treatment is performed to produce a molded body from chloroprene polymer latex, and a crosslinking accelerator is often used during the crosslinking treatment. Further, crosslinking accelerators such as 1,3-diphenyl-2-thiourea and ethylenethiourea are often used. However, it is desirable to use a material having a smaller environmental load during the crosslinking treatment of a chloroprene polymer.

An object of the present invention is to provide a latex composition capable of performing the crosslinking treatment of a chloroprene polymer using a material having a relatively small environmental load.

### Solution to Problem

The present inventors have conducted extensive studies to achieve the above object, and have found that the above object can be achieved by adding, in place of a crosslinking accelerator having a high environmental load, a thiol compound (B) having 2 or more mercapto groups in a molecule to a latex composition, wherein the thiol compound (B) has 2 or more partial structures represented by CH₃(SH)CHCH₂COOCH₂-in a molecule, thereby completing the present invention. The present invention is defined in the appended claims.

### Advantageous Effect of Invention

The present invention can provide a latex composition capable of performing the crosslinking treatment of a chloroprene polymer using a material having a relatively small environmental load.

### Description of Embodiments

Hereinafter, embodiments of the present invention will be described in detail, but the present invention is not limited to the following elements of embodiments. Components to be described below can be used singly or two or more thereof can be used.

### [Latex composition]

An embodiment of the latex composition according to the present invention (hereinafter, also referred to as the "composition of the present embodiment") includes a chloroprene polymer (A), and a thiol compound (B) having 2 or more mercapto groups in a molecule, wherein the thiol compound (B) has 2 or more partial structures represented by CH₃(SH)CHCH₂COOCH₂- in a molecule (hereinafter, also simply referred to as the "thiol compound (B)"). The latex composition can be prepared by any preparation method in which microparticles of the chloroprene polymer (A) and the thiol compound (B) can be dispersed in a dispersion medium such as water. For example, the latex composition can be prepared from microparticles of the chloroprene polymer (A) and the thiol compound (B), or can be produced by mixing chloroprene polymer latex and the thiol compound (B). The chloroprene polymer latex herein refers to the latex in which microparticles of the chloroprene polymer (A) are dispersed in a dispersion medium such as water.

The latex composition can include a component other than the chloroprene polymer (A) and the thiol compound (B). For example, the latex composition can include an additive such as an emulsifier, a chain transfer agent, and a stabilizer within the range of not affecting the object of the present invention.

### <<Chloroprene polymer (A)>>

The chloroprene polymer (A) can be a homopolymer of a 2-chloro-1,3-butadiene (chloroprene) monomer, or can also be a copolymer of an additional monomer copolymerizable with chloroprene and chloroprene (hereinafter, also referred to as the "chloroprene copolymer"). The chloroprene homopolymer does not have any structural unit derived from a monomer other than chloroprene. In contrast, the chloroprene copolymer has a structural unit derived from a chloroprene monomer and a structural unit derived from the comonomer. The comonomer herein refers to an additional monomer copolymerizable with chloroprene.

Examples of the comonomer include butadiene, butadiene derivatives other than chloroprene, styrene, acrylonitrile, acrylic acid, acrylic acid derivatives, methacrylic acid, and methacrylic acid derivatives. Examples of the butadiene derivative include alkylated 1,3-butadiene, and chlorinated 1,3-butadiene. Examples of the alkylated 1,3-butadiene include isoprene. Examples of the chlorinated 1,3-butadiene include 2,3-dichloro-1,3-butadiene, and 1-chloro-1,3-butadiene. Examples of the acrylic acid derivative include esters of acrylic acid. Examples of the methacrylic acid derivative include esters of methacrylic acid. The proportion of the comonomer in the monomers used for forming the chloroprene polymer (A) is preferably 30 mass% or less, more preferably 5 mass% or less, and further preferably 0 mass%. When a proportion of the comonomer is 30 mass% or less of the monomers used for forming the chloroprene polymer (A), the crosslinking treatment can be well performed.

When the chloroprene polymer (A) is a homopolymer of chloroprene, the crosslinking rate is faster than when the chloroprene polymer (A) is a chloroprene copolymer. For this reason, it is preferable to use a chloroprene homopolymer to shorten the crosslinking time.

The chloroprene polymer (A) can also be any modified chloroprene rubber. The chloroprene polymer (A) can be, for example, sulfur-modified chloroprene rubber, mercaptan-modified chloroprene rubber, carboxyl-modified chloroprene rubber, xanthogen-modified chloroprene rubber, or a mixture of one or more of these.

The z-average particle size of the chloroprene polymer (A) included in the latex composition is preferably 100 nm or more, and more preferably 250 nm or more. The z-average particle size of the chloroprene polymer (A) is preferably 500 nm or less, and more preferably 450 nm or less. When a z-average particle size of the chloroprene polymer (A) is 100 nm or more and 500 nm or less, stable particles can be formed, hence preferable. The z-average particle size of the chloroprene polymer (A) can be obtained by, for example, measuring a sample prepared by diluting chloroprene polymer latex or a latex composition with pure water using a dynamic light scattering photometer.

### <Method for producing chloroprene polymer (A) and compounds used for production>

Any polymerization method is applicable when producing the chloroprene polymer (A), and aqueous emulsion polymerization is preferable. The polymerization temperature when producing the chloroprene polymer (A) is preferably 30°C or more, more preferably 33°C or more, and particularly preferably 35°C or more. The polymerization temperature of the chloroprene polymer (A) is preferably 55°C or less, more preferably 50°C or less, and particularly preferably 45°C or less. When a polymerization temperature is 30°C or more, the productivity of the chloroprene polymer (A) is good, and the adhesive force of the latex to be obtained is within an intended range, hence preferable. When a polymerization temperature is 55°C or less, the vapor pressure of chloroprene reduces thereby making the polymerization operation extremely easy and resulting in good mechanical properties such as tensile strength of the polymer to be obtained.

When producing the chloroprene polymer (A), for example, an emulsifier, a polymerization initiator, a chain transfer agent, and a polymerization terminator can be used other than the monomers used for the polymerization.

An emulsifier can be added for the emulsion polymerization. For the emulsifier, an anionic surfactant is preferable. Examples of the anionic surfactant include a rosin acid soap, a sodium salt of a naphthalene sulfonic acid condensate, a sodium salt of dodecylbenzene sulfonic acid, and a sodium salt of dodecyl sulfate. When a rosin acid soap is used, coagulation operation is simple, and it is thus preferable to use a rosin acid soap as an emulsifier.

Hereinafter, examples of the amount of a rosin acid soap used and examples of the amount of an anionic surfactant other than the rosin acid soap used per 100 parts by mass of the total amount of the monomers used for forming the chloroprene polymer (A) will be described. The amount of the rosin acid soap used is, in terms of rosin acid, preferably 1.5 parts by mass or more, more preferably 1.6 parts by mass or more, and further preferably 1.7 parts by mass or more. Further, the amount of the rosin acid soap used is, in terms of rosin acid, preferably 4.0 parts by mass or less, more preferably 3.7 parts by mass or less, and further preferably 3.5 parts by mass or less. The amount of the anionic surfactant other than a rosin acid soap used is preferably 0.01 parts by mass or more, more preferably 0.02 parts by mass or more, and further preferably 0.05 parts by mass or more. The amount of the anionic surfactant other than the rosin acid soap used is preferably 8.0 parts by mass or less, more preferably 7.0 parts by mass or less, and further preferably 6.0 parts by mass or less.

When an amount of the emulsifier used is equal to or more than the above-described lower limit value, poor emulsification less likely occurs thereby enabling to control the heat generation caused by polymerization, and there is no problem such as aggregate formation and poor product appearance. Further, when an amount of the emulsifier used is equal to or less than the above-described upper limit value, the emulsifier does not remain in the chloroprene copolymer thereby resulting in the chloroprene copolymer which is less likely adhesive. As a result, when an amount of the emulsifier used is the above-described upper limit value or less, there will be no problems of adherence to a former when molding a chloroprene copolymer latex composition, workability and operability caused by, for example, adhesion when a molded body is used, and degradation of a color tone of a molded body.

The particle size of the chloroprene polymer (A) can be adjusted by the amount of the anionic surfactant used. For example, the particle size of the chloroprene polymer (A) can be controlled by the amount of rosin acid and the amount of various emulsifiers to the monomer parts by mass when polymerized. For example, the larger an amount of the emulsifier, the smaller the particle size of the chloroprene polymer (A) tends to be, and the smaller an amount of the emulsifier, the larger the particle size of the chloroprene polymer (A) tends to be.

The polymerization initiator is not particularly limited and can be selected from the general radical polymerization initiators. For example, when the chloroprene polymer (A) is produced by emulsion polymerization, a polymerization initiator such as a peroxide and an azo compound can be used. The peroxide can be either an organic peroxide or an inorganic peroxide. Examples of the usable peroxide include benzoyl peroxide, potassium persulfate, and ammonium persulfate. Examples of the usable azo compound include azobisisobutyronitrile. For the polymerization initiator, two or more radical polymerization initiators can be used in combination.

The amount of the polymerization initiator used per 100 parts by mass of the monomers used for the polymerization is preferably 0.01 parts by mass or more, more preferably 0.1 parts by mass or more, and further preferably 0.2 parts by mass or more. The amount of the polymerization initiator used per 100 parts by mass of the monomers used for the polymerization is preferably 10 parts by mass or less, more preferably 5 parts by mass or less, and further preferably 3 parts by mass or less.

During the polymerization, one or more co-catalysts can be used in combination other than the polymerization initiator. Examples of the co-catalyst include anthraquinone sulfonate, potassium sulfite, and sodium sulfite.

The chain transfer agent is not particularly limited and can be selected from the general chain transfer agents. Examples of the chain transfer agent include alkyl mercaptan such as n-dodecyl mercaptan. The amount of the chain transfer agent used per 100 parts by mass of the monomers used for the polymerization is preferably 0.01 parts by mass or more, more preferably 0.05 parts by mass or more, and further preferably 0.1 parts by mass or more. The amount of the chain transfer agent used per 100 parts by mass of the monomers used for the polymerization is preferably 10 parts by mass or less, more preferably 5 parts by mass or less, and further preferably 3 parts by mass or less.

The polymerization terminator is not particularly limited and can be selected form the general polymerization terminators. The polymerization terminator is added to the system at which a predetermined polymerization conversion rate is achieved. Examples of the polymerization terminator include phenothiazine, para-t-butylcatechol, hydroquinone, hydroquinone monomethyl ether, and diethylhydroxylamine. The amount of the polymerization terminator added can be any amount at which the polymerization reaction can be terminated.

### <pH and amount of solid contents of chloroprene polymer latex (A1)>

The amount of the chloroprene polymer (A) included in a predetermined amount of the chloroprene polymer latex (A1) can be determined from, for example, the amount of a dried solid matter obtained when a predetermined amount of the chloroprene polymer latex (A1) is dried at a predetermined temperature for a predetermined period of time. In this case, the amount of the chloroprene polymer (A) is supposed to be a value obtained by subtracting a mass of the materials other than the chloroprene polymer (A) which do not evaporate under the drying conditions for obtaining the dried solid matter from the mass of the dried solid matter obtained by the drying treatment of the chloroprene polymer latex (A1). In the present embodiment, the drying conditions for obtaining the dried solid matter refer that a predetermined amount of the chloroprene polymer latex (A1) is allowed to stand in an oven at 141°C for 30 minutes.

The proportion of the chloroprene polymer (A) in the chloroprene polymer latex (A1) is preferably 40 mass% or more, more preferably 45 mass% or more, and further preferably 55 mass% or more. Further, the proportion of the chloroprene polymer (A) in the chloroprene polymer latex (A1) is preferably 70 mass% or less, more preferably 65 mass% or less, and further preferably 62 mass% or less. When a proportion of the chloroprene polymer (A) in the chloroprene polymer latex (A1) is 40 mass% or more, a drying time can be reduced thereby decreasing the load of a drying apparatus. Further, when a proportion of the chloroprene polymer (A) in the chloroprene polymer latex (A1) is 70 mass% or less, the fluidity of the chloroprene polymer latex (A1) can be in an intended range.

pH of the chloroprene polymer latex (A1) at 25°C is preferably 11 or more, more preferably 11.5 or more, and further preferably 13 or more. Further, pH of the chloroprene polymer latex (A1) at 25°C is preferably 14 or less.

Brookfield viscosity of the chloroprene polymer latex is preferably 5.0 mPa·s or more, more preferably 10.0 mPa·s or more, and further preferably 20.0 mPa·s or more. Brookfield viscosity of the chloroprene polymer latex is preferably 500.0 mPa·s or less, more preferably 100.0 mPa·s or less, and further preferably 50.0 mPa·s or less. When a Brookfield viscosity of the chloroprene polymer latex is 500.0 mPa·s or less, the latex has an intended viscosity and is thus easier to handle, hence preferable. When a Brookfield viscosity of the chloroprene polymer latex is 5.0 mPa·s or more, the diffusion speed of additives (for example, crosslinking agent, crosslinking accelerator, and preservative) mixed in the latex is fast thereby shortening an aging time, hence preferable. The Brookfield viscosity of the chloroprene polymer latex can be measured by the method employed in Examples to be described later.

### <<Thiol compound (B)>>

The thiol compound (B) included in the composition of the present embodiment has 2 or more mercapto groups in a molecule, wherein the thiol compound (B) has 2 or more partial structures represented by CH₃(SH)CHCH₂COOCH₂- in a molecule. The descriptions in the present Description are not intended to be bound by any specific theory, but it is presumed that the thiol compound (B), when heated to a temperature suitable for the crosslinking treatment (crosslinking temperature), reacts with the double bonds and a chloro group included in the chloroprene polymer and forms a crosslinked structure in the chloroprene polymer. In other words, the thiol compound (B), when heated to the crosslinking temperature, acts as a film-forming aid for helping the film formation when forming a molded body from the chloroprene polymer latex.

The thiol compound (B) is not particularly limited as long as a compound has 2 or more mercapto groups in a molecule, wherein the thiol compound (B) has 2 or more partial structure represented by CH₃(SH)CHCH₂COOCH₂- in a molecule. The number of mercapto groups in the thiol compound (B) is preferably 2 to 10, more preferably 2 to 8, and further preferably 2 to 6, in a molecule. The molecular weight of the thiol compound (B) is preferably 3000 or less, more preferably 2500 or less, and further preferably 2000 or less. Further, the molecular weight of the thiol compound (B) is preferably 100 or more, more preferably 150 or more, and further preferably 200 or more. The thiol compound (B) can be a reactant of an aliphatic alcohol and mercapto-substituted carboxylic acid, or can be a reactant of a mercapto-substituted alcohol and carboxylic acid. The carboxylic acid herein can be either aliphatic carboxylic acid or aromatic carboxylic acid.

Examples of the thiol compound having 2 primary mercapto groups in a molecule include butanediol bis(2-mercaptoacetate), hexanediol bis(2-mercaptoacetate), ethanediol bis(2-mercaptoacetate), 2,2'-(ethylenedithio)diethanethiol, ethyleneglycol bis(3-mercapto-2-methylpropionate), propyleneglycol bis(3-mercapto-2-methylpropionate), diethyleneglycol bis(3-mercapto-2-methylpropionate), butanediol bis(3-mercapto-2-methylpropionate), octanediol bis(3-mercapto-2-methylpropionate), and bis(3-mercapto-2-methylpropyl)phthalate.

Examples of the thiol compound having 2 secondary mercapto groups in a molecule include 1,4-bis(3-mercaptobutyryloxy)butane, bis(1-mercaptoethyl)phthalate, bis(2-mercaptopropyl)phthalate, bis(3-mercaptobutyl)phthalate, ethyleneglycol bis(3-mercaptobutylate), propyleneglycol bis(3-mercaptobutylate), diethyleneglycol bis(3-mercaptobutylate), butanediol bis(3-mercaptobutylate), octanediol bis(3-mercaptobutylate), ethyleneglycol bis(2-mercaptopropionate), propyleneglycol bis(2-mercaptopropionate), diethyleneglycol bis(2-mercaptopropionate), butanediol bis(2-mercaptopropionate), octanediol bis(2-mercaptopropionate), ethyleneglycol bis(4-mercaptovalerate), propyleneglycol bis(4-mercaptoisovalerate), diethyleneglycol bis(4-mercaptovalerate), butanediol bis(4-mercaptovalerate), octanediol bis(4-mercaptovalerate), ethyleneglycol bis(3-mercaptovalerate), propyleneglycol bis(3-mercaptovalerate), diethyleneglycol bis(3-mercaptovalerate), butanediol bis(3-mercaptovalerate), and octanediol bis(3-mercaptovalerate).

Examples of the thiol compound having 2 tertiary mercapto groups in a molecule include ethyleneglycol bis(2-mercaptoisobutylate), propyleneglycol bis(2-mercaptoisobutylate), diethyleneglylcol bis(2-mercaptoisobutylate), butanediol bis(2-mercaptoisobutylate), and octanediol bis(2-mercaptoisobutylate).

Examples of the thiol compound having 3 primary mercapto groups in a molecule include trimethylolpropane tris(2-mercaptoacetate), trimethylolpropane tris(3-mercaptopropionate), and trimethylolpropane tris(3-mercapto-2-methylpropionate).

Examples of the thiol compound having 3 secondary mercapto groups in a molecule include trimethylolpropane tris(3-mercaptobutylate), trimethylolpropane tris(2-mercaptopropionate), trimethylolpropane tris(4-mercaptovalerate), trimethylolpropane tris(3-mercaptovalerate), 1,3,5-tris(3-mercaptobutyloxyethyl)-1,3,5-triazine-2,4,6(1H,3H,5H)-trione, and 1,3,5-tris(2-(3-sulfanylbutanoyloxy)ethyl)-1,3,5-triazinane-2,4,6-trione.

Examples of the thiol compound having 3 tertiary mercapto groups in a molecule include trimethylolpropane tris(2-mercaptoisobutylate).

Examples of the thiol compound having 4 primary mercapto groups in a molecule include pentaerythritol tetrakis(2-mercaptoacetate), and pentaerythritol tetrakis(3-mercaptopropionate).

Examples of the thiol compound having 4 secondary mercapto groups in a molecule include pentaerythritol tetrakis(3-mercaptobutylate), pentaerythritol tetrakis(2-mercaptopropionate), pentaerythritol tetrakis(3-melcapto-2-propionate), pentaerythritol tetrakis(4-mercaptovalerate), and pentaerythritol tetrakis(3-mercaptovalerate).

Examples of the thiol compound having 4 tertiary mercapto groups in a molecule include pentaerythritol tetrakis(2-mercaptoisobutylate).

Examples of the thiol compound having 6 primary mercapto groups in a molecule include dipentaerythritol hexakis(3-mercapto-2-methylpropionate).

Examples of the thiol compound having 6 secondary mercapto groups in a molecule include dipentaerythritol hexakis(3-mercaptobutylate), dipentaerythritol hexakis(2-mercaptopropionate), dipentaerythritol hexakis(4-mercaptovalerate), and dipentaerythritol hexakis(3-mercaptovalerate).

Examples of the thiol compound having 6 tertiary mercapto groups in a molecule include dipentaerythritol hexakis(2-mercaptoisobutylate) .

The mercapto group included in the thiol compound (B) can be either a primary mercapto group, a secondary mercapto group, or a tertiary mercapto group but is preferably a primary mercapto group or a secondary mercapto group, and more preferably a secondary mercapto group. In the case of a primary mercapto group or a secondary mercapto group, steric hindrance is smaller than a tertiary mercapto group due to which the reactivity is considered better than a tertiary mercapto group. A plurality of mercapto groups in the thiol compound (B) can be mercapto groups having the same class or mercapto groups having different classes. For example, the thiol compound (B) can have a primary mercapto group and a secondary mercapto group.

Mercapto groups are included as a partial structure represented by CH₃(SH)CHCH₂COOCH₂- in a molecule. Examples of preferable thiol having the partial structure represented by CH₃(SH)CHCH₂COOCH₂- include 1,4-bis(3-mercaptobutyryloxy)butane (a specific product example is Karenz MT (R) BD1 manufactured by Showa Denko K.K.), 1,3,5-tris(2-(3-sulfanylbutanoyloxy)ethyl)-1,3,5-triazinane-2,4,6-trione (a specific product example is Karenz MT (R) NR1 manufactured by Showa Denko K.K.), pentaerythritol tetrakis(3-mercaptobutylate) (a specific product example is Karenz MT (R) PE1 manufactured by Showa Denko K.K.), and trimethylolpropane tris(3-mercaptobutylate) (a specific product example is Karenz MT (R) TPMB manufactured by Showa Denko K.K.).

When the thiol compound (B) mentioned above is used to prepare the composition of the present embodiment, a molded body having performance equal to or greater than the case where a thiourea compound is used can be produced without using a thiourea compound such as ethylenethiourea and 1,3-diphenylthiourea. The ethylenethiourea herein demonstrates reproductive toxicity and is thus included in the Substances of Very High Concern list under the REACH (Registration, Evaluation, Authorization and Restriction of Chemicals) Regulation. 1,3-Diphenythiourea is also a thiourea compound, just as is ethylenethiourea, having a high environmental load and it is thus desirable to abstain from the use. For this reason, the composition of the present embodiment has a benefit of being capable of producing a molded body having performance equal to or greater than when a thiourea compound is used without using a thiourea compound having a high environmental load.

The amount of the thiol compound (B) in the composition per 100 parts by mass of the chloroprene polymer (A) is preferably 0.05 parts by mass or more, more preferably 0.25 parts by mass or more, and further preferably 2 parts by mass or more. When an amount of the thiol compound (B) in the composition is the above-mentioned lower limit value or more, the crosslinking structure is obtained in a molded body by the crosslinking treatment thereby increasing the elasticity of the molded body and also increasing the breaking strength of the molded body, hence preferable. The amount of the thiol compound (B) in the composition per 100 parts by mass of the chloroprene polymer (A) is preferably 20 parts by mass or less, more preferably 15 parts by mass or less, and further preferably 11 parts by mass or less. When an amount of the thiol compound (B) in the composition is the above-mentioned upper limit value or less, the dispersion of the thiol compound (B) to the chloroprene polymer (A) is good thereby likely forming the crosslinking structure evenly in the molded body and preventing reduction in the breaking strength of the molded body and reduction in breaking elongation of the molded body, hence preferable.

### <<Other components included in composition>>

The composition of the present embodiment can further include one or more of a metal oxide and a crosslinking accelerator (vulcanization accelerator) for the crosslinking treatment.

The metal oxide can be used for accelerating the crosslinking of the chloroprene polymer (A) and can act as one or more of a crosslinking agent, a crosslinking accelerator, and a crosslinking aid. For the metal oxide, for example, zinc oxide can be used. The metal oxide other than zinc oxide can be, for example, lead oxide and trilead tetraoxide however, zinc oxide is more preferable when considering the load imposed on the environment. The metal oxide can also be, for example, a magnesium oxide and a calcium oxide.

The amount of the metal oxide in the composition of the present embodiment is preferably 0.1 parts by mass or more, more preferably 0.5 parts by mass or more, and further preferably 1 part by mass or more, per 100 parts by mass of the amount of the chloroprene polymer (A). Further, the amount of the metal oxide in the composition is preferably 15 parts by mass or less, more preferably 12 parts by mass or less, and further preferably 10 parts by mass or less, per 100 parts by mass of the amount of the chloroprene polymer (A). In this case, a suitable crosslinking rate can be obtained, whereby insufficient crosslinking less likely occurs, and scorch less likely occurs.

The crosslinking accelerator (vulcanization accelerator) can be selected from the crosslinking accelerators generally used for crosslinking of chloroprene polymers. Examples of the crosslinking accelerator include a dithiocarbamate crosslinking accelerator, a thiazole crosslinking accelerator, a thiuram crosslinking accelerator, a guanidine crosslinking accelerator, and a xanthogenate crosslinking accelerator.

Examples of the dithiocarbamate crosslinking accelerator include sodium dibutyldithiocarbamate, zinc dibutyldithiocarbamate, and zinc diethyldithiocarbamate. Examples of the thiazole crosslinking accelerator include di-2-benzothiazolyl disulfide. Examples of the thiuram crosslinking accelerator include tetraethylthiuram disulfide, and tetrabutylthiuram disulfide. Examples of the guanidine crosslinking accelerator include diphenyl guanidine, and di-ortho-tolylguanidine. From the viewpoint of environmental loads, it is preferable that the composition of the present embodiment does not include a crosslinking accelerator.

Other additives can further be mixed in the composition of the present embodiment. Examples of the additive which can be mixed in include a pH regulator, a pigment, a colorant, and an antioxidant. Examples of the antioxidant include an oligomeric hindered phenol. The oligomeric hindered phenol is a butylated reactant of dicyclopentadiene and p-cresol.

### [Molded body]

A molded body can be formed by performing the crosslinking treatment on the composition of the present embodiment. Examples of the molded body include a glove, a balloon, a rubber thread, and a boot. Further, the type of gloves obtained by the crosslinking treatment on the composition is optional and can be one or more of, for example, household gloves, industrial gloves, examination gloves, health checkup gloves, and surgical gloves.

A molded body is formed by, for example, drying the composition of the present embodiment and then increasing a temperature to a crosslinking temperature. For example, in the immersion processing method, a former is immersed in the composition of the present embodiment, a mixture of the chloroprene polymer (A) and the thiol compound (B) is coagulated on the surface of the former and then subjected to drying treatment and crosslinking treatment thereby to obtain a film-like molded body. The drying treatment can encompass preliminary drying, which is performed at a comparatively low temperature before the crosslinking treatment for the purpose of avoiding, for example, blisters and pin holes.

In the crosslinking treatment, the mixture of the chloroprene polymer (A) and the thiol compound (B) after the drying treatment is heated to an intended crosslinking temperature over an intended crosslinking time. The crosslinking temperature of the chloroprene polymer is preferably 110°C or more, more preferably 115°C or more, and further preferably 120°C or more. The crosslinking temperature of the chloroprene polymer is preferably 160°C or less, more preferably 150°C or less, and further preferably 140°C or less. The crosslinking time of the chloroprene polymer is preferably 10 minutes or more, and more preferably 20 minutes or more. The crosslinking time of the chloroprene polymer can be 60 minutes or less, and more preferably 30 minutes or less.

### Examples

Hereinafter, the present invention will be specifically described based on examples. In the following descriptions in examples, the "part" refers to "part by mass" unless otherwise stated. Measurement methods and calculation methods of physical properties used in Examples and Comparative Examples are first described, followed by individual Example.

### [Measurement methods for physical properties of chloroprene polymer latex (A1) and molded body]

### <Polymerization conversion rate of chloroprene polymer (A)>

An emulsified product after the start of the polymerization of the chloroprene polymer (A) was collected and allowed to stand in an oven at 141°C for 30 minutes to dryness thereby to obtain a dried solid matter. The dried solid matter obtained by the drying treatment includes the polymer and solid matters other than the polymer. Thus, the components that do not volatile at 141°C from each of the components used for the emulsion polymerization were calculated based on the amount of polymerization materials charged thereby to define as the mass of solid matters other than the polymer. Further, the value obtained by subtracting the mass of solid matters other than the polymer from the mass of the dried solid matter obtained by drying the emulsified product after the polymerization was defined as the "amount of the polymer produced", and a polymerization conversion rate was calculated using an equation (1). Polymerization conversion rate [mass%] = [(amount of the polymer produced/amount of all monomers charged)] × 100

The "amount of all monomers charged" in the equation (1) is the sum of the amount of chloroprene charged and the amount of the comonomer charged included in the amount of the emulsified product collected to obtain the dried solid matter.

### <Solid content of chloroprene polymer latex (A1)>

A predetermined amount of the chloroprene polymer latex (A1) was collected, and a mass of the chloroprene copolymer latex (A1) collected was weighed. Subsequently, the weighed chloroprene copolymer latex (A1) was allowed to stand in an oven at 141°C for 30 minutes to dryness thereby to obtain a dried solid matter. A solid content was determined from the mass of the latex before being dried and the mass of the solid matter obtained after being dried in accordance with an equation (2). Solid content (mass%) = [(mass of solid matter after being dried)/(mass of latex before being dried)] × 100

### <z-Average particle size of chloroprene polymer (A)>

The chloroprene polymer latex (A1) was diluted with pure water until a proportion of the chloroprene polymer (A) was 0.01 to 0.1 mass% to use as a measurement sample. The obtained measurement sample was measured using a dynamic light scattering photometer (ZETASIZER (R) Nano-S, manufactured by Malvern Panalytical Ltd.) thereby to determine a z-average particle size of the chloroprene polymer (A) in the chloroprene polymer latex (A1).

### <Viscosity>

The chloroprene polymer latex (A1) to be the test sample was put in a 300 mL polypropylene beaker, and a state completely free of air bubbles inside was achieved. Using a B-type viscometer described in JIS K7117-1:1999, the second viscosity of the results with measured values of 5% or less in the continuous measurement was defined as the viscosity to record.
Instrument: BROOKFIELD viscometer DV-E LVDVE115
Spindle: No. 1 Spindle
Revolutions per minute: 60 rpm
Temperature: 25°C

### <Evaluation on physical properties of molded body obtained by crosslinking treatment>

A crosslinked film was cut into a No. 6 dumbbell in accordance with JIS-K6251-2017 thereby to obtain a test piece. The film test piece was subjected to a tensile test by the method in accordance with JIS-K6251-2017 to measure a modulus at 100% elongation (M100), a tensile strength (T_{B}), and an elongation at break (E_{B}), at 23°C.

### [Production example of a chloroprene polymer latex (A1-1)]

A reactor having an internal volume of 5 litters was charged with 2.0 kg of 2-chloro-1,3-butadiene (manufactured by Tokyo Chemical Industry Co., Ltd.), 1.04 kg of pure water, 40 g of rosin acid (manufactured by ARAKAWA CHEMICAL INDUSTRIES, LTD, R-300), 2 g of n-dodecyl mercaptan (Tokyo Chemical Industry Co., Ltd.), 100 g of 20 mass% potassium hydroxide aqueous solution (special grade product manufactured by Wako Pure Chemical Corporation), 12.8 g of a sodium salt of β-naphthalene sulphonate formalin condensate (manufactured by Kao Corporation), and 6.7 g of a 15 mass% aqueous solution of sodium dodecyl benzene sulfonate (manufactured by Kao Corporation, NEOPELEX (R) G-15). The amount of each material charged was, in terms of 100 parts of 2-chloro-1,3-butadiene, 52 parts of pure water, 2 parts of rosin acid, 0.1 parts of n-dodecyl mercaptan, 1 part of potassium hydroxide, 0.64 parts of a sodium salt of β-naphthalene sulphonate formalin condensate, and 0.05 parts of sodium dodecyl benzene sulfonate.

The starting materials charged in the reactor were emulsified, whereby the rosin acid was formed as a rosin soap. Subsequently, using 0.3 parts of potassium persulfate (first-class product manufactured by Wako Pure Chemical Corporation) as a polymerization initiator, the polymerization was performed under a nitrogen atmosphere at 40°C for 5 hours. The polymerization was terminated at the confirmation of a polymerization conversion rate of 94 mass% or more. The polymerization conversion rate was calculated in accordance with the equation (1).

Unreacted monomers were removed by steam distillation thereby to obtain a chloroprene polymer latex (A1-1). A solid content of the chloroprene polymer latex (A1-1) was 58 mass%. The solid content was determined using the equation (2). pH of the chloroprene polymer latex (A1-1) was 13.0. Further, a z-average particle size of the chloroprene polymer contained in the chloroprene polymer latex (A1-1) obtained in the Production example was 20 µm. A viscosity of the chloroprene polymer latex (A1-1) obtained in Production example was 40 mPa·s.

### [Example 1]

A three-one-motor stirring tank was charged with, in terms of 100 parts of the chloroprene polymer latex (A1-1) (about 58 parts of the chloroprene polymer), 5 parts of zinc oxide (AZ-SW manufactured by Osaki Industry Co., Ltd.), 2 parts of zinc(II) dibutyldithiocarbamate (NOCCELER (R) BZ, manufactured by OUCHI SHINKO CHEMICAL INDUSTRIAL CO., LTD.), 1 part of an oligomeric hindered phenol antioxidant (Selosol (R) K-840 manufactured by CHUKYO YUSHI CO.,LTD.), and 3 parts of 1,4-bis(3-mercaptobutyryloxy)butane (Karenz MT (R) BD1 manufactured by Showa Denko K.K.). The amount of each material allowed to stand in the stirring tank was shown in the column under Example 1 of Table 1. The contents in the stirring tank were stirred using the three-one-motor at 300 rpm for 5 minutes thereby to prepare a chloroprene polymer latex composition. Subsequently, the chloroprene polymer latex composition was allowed to stand at room temperature (20°C) for 24 hours and aged.

### [Examples 2 to 11, Comparative Examples 1, 2]

Chloroprene polymer latex compositions were prepared by the same treatment as the treatment described in Example 1 except the compositions of each material used for the preparation were as shown in Table 1. In Comparative Examples 1 and 2, 1,3-diphenyl-2-thiourea was used in place of the thiol compound (B).

### [Table 1]

**Table 1**

| | Example 1 | Example 2 | Example 3 | Example 4 | Example 5 |
|---|---|---|---|---|---|
| Chloroprene polymer latex (whole) | 100 | 100 | 100 | 100 | 100 |
| Chloroprene polymer | 58 | 58 | 58 | 58 | 58 |
| Zinc oxide | 5 | 5 | 5 | 5 | 5 |
| Zinc(II) dibutyldithiocarbamate | 2 | 2 | 2 | 2 | - |
| Oligomeric hindered phenol | 1 | 1 | 1 | 1 | 1 |
| 1,3-Diphenyl-2-thiourea | - | - | - | - | - |
| 1,4-Bis(3-mercaptobutyryloxy)butane | 3 | 6 | - | - | 1 |
| 1,3,5-Tris(2-(3-sulfanylbutanoyloxy)ethyl)-1,3,5-triazinane-2,4,6-trione | - | - | 6 | - | - |
| Pentaerythritol tetrakis(3-mercaptobutylate) | - | - | - | 6 | - |
| Total | 111 | 114 | 114 | 114 | 107 |
| Amount of thiol compound per 100 parts of chloroprene polymer | 5 | 10 | 10 | 10 | 2 |

**Table 1 (continued)**

| | Example 6 | Example 7 | Example 8 | Example 9 | Example 10 |
|---|---|---|---|---|---|
| Chloroprene polymer latex (whole) | 100 | 100 | 100 | 100 | 100 |
| Chloroprene polymer | 58 | 58 | 58 | 58 | 58 |
| Zinc oxide | 5 | 5 | 5 | 5 | 5 |
| Zinc(II) dibutyldithiocarbamate | - | - | - | - | - |
| Oligomeric hindered phenol | 1 | 1 | 1 | 1 | 1 |
| 1,3-Diphenyl-2-thiourea | - | - | - | - | - |
| 1,4-Bis(3-mercaptobutyryloxy)butane | 3 | 6 | - | - | - |
| 1,3,5-Tris(2-(3-sulfanylbutanoyloxy)ethyl)-1,3,5-triazinane-2,4,6-trione | - | - | 1 | 6 | - |
| Pentaerythritol tetrakis(3-mercaptobutylate) | - | - | - | - | 1 |
| Total | 109 | 112 | 107 | 112 | 107 |
| Amount of thiol compound per 100 parts of chloroprene polymer | 5 | 10 | 2 | 10 | 2 |

**Table 1 (continued)**

| | Example 11 | Comparative Example 1 | Comparative Example 2 |
|---|---|---|---|
| Chloroprene polymer latex (whole) | 100 | 100 | 100 |
| Chloroprene polymer | 58 | 58 | 58 |
| Zinc oxide | 5 | 5 | 5 |
| Zinc(II) dibutyldithiocarbamate | - | 2 | - |
| Oligomeric hindered phenol | 1 | 1 | 1 |
| 1,3-Diphenyl-2-thiourea | - | 1 | 1 |
| 1,4-Bis(3-mercaptobutyryloxy)butane | - | - | - |
| 1,3,5-Tris(2-(3-sulfanylbutanoyloxy)ethyl)-1,3,5-triazinane-2,4,6-trione | - | - | - |
| Pentaerythritol tetrakis(3-mercaptobutylate) | 6 | - | - |
| Total | 112 | 109 | 107 |
| Amount of thiol compound per 100 parts of chloroprene polymer | 10 | | |

| | | | |
|---|---|---|---|
| (Numerical value indicates part by mass.) | | | |

### [Evaluations]

### <Formation of molded body>

A ceramic plate having a length of 200 mm, a width of 100 mm, and a thickness of 5 mm was used as a former for an immersion film. For the purpose of allowing calcium nitrate to be a coagulant to adhere to the surface of the former for the immersion film, the former for the immersion film was immersed in a coagulation liquid containing a 30 mass% calcium nitrate aqueous solution/methanol/clay in 90:10:5 (mass ratio), respectively. At this operation, the clay used was aluminum silicate (crown clay manufactured by Southern Clay Products Inc.). The former for the immersion film was taken out of the coagulation liquid and dried in an oven at 40°C for 5 minutes.

The dried former was immersed in the chloroprene polymer latex composition obtained in Example 1, and the solid content of the chloroprene polymer latex composition was deposited on the former surface. After being immersed over a predetermined period of time, the former was pulled out and allowed to stand in an oven at 70°C for 30 minutes.

After being dried, the former with the solid content deposited on its surface was put in an oven to perform the crosslinking treatment at a crosslinking temperature of 130°C. Three crosslinking times included 10 minutes, 20 minutes, and 30 minutes. After the crosslinking treatment, the former with a film formed on its surface by the crosslinking treatment was allowed to cool in the atmosphere. After cooling, the film was cut out from the former surface thereby to obtain the film as a molded body after the crosslinking treatment.

Each of the compositions prepared in Examples 2 to 11 and Comparative Examples 1 and 2 was also used to form a molded body in the same procedures as the composition prepared in Example 1. The films obtained by using any of the compositions prepared in Examples 1 to 11 and Comparative Examples 1 and 2 all had a thickness of about 0.15 to 0.25 mm.

The films after the crosslinking treatment formed by using the compositions prepared in Examples 1 to 11 and Comparative Examples 1 and 2 respectively were determined for a modulus at 100% elongation (M100), a tensile strength (T_{B}), and an elongation at break (E_{B}), at 23°C. The obtained results are shown in Table 2.

### [Table 2]

**Table 2**

| 130°C × 30 min | | Example 1 | Example 2 | Example 3 | Example 4 | Example 5 | Example 6 | Example 7 | Example 8 | Example 9 | Example 10 | Example 11 | Comparative Example 1 | Comparative Example 2 |
|---|---|---|---|---|---|---|---|---|---|---|---|---|---|---|
| Normal properties JIS No. 6 dumbbell 23°C 50RH% CHS: 200 mm/min | M100[MPa] | 1.39 | 1.33 | 1.18 | 1.27 | 0.83 | 0.76 | 0.72 | 0.81 | 0.86 | 0.74 | 0.81 | 1.01 | 0.90 |
| | T_{B} [MPa] | 15.33 | 16.89 | 17.29 | 13.37 | 16.87 | 12.73 | 13.67 | 18.10 | 13.42 | 15.36 | 12.35 | 16.93 | 19.29 |
| | E_{B} [%] | 650 | 700 | 830 | 700 | 1190 | 1150 | 1190 | 1160 | 1085 | 1210 | 1045 | 700 | 965 |

| 130°C × 20 min | | Example 1 | Example 2 | Example 3 | Example 4 | Example 5 | Example 6 | Example 7 | Example 8 | Example 9 | Example 10 | Example 11 | Comparative Example 1 | Comparative Example 2 |
|---|---|---|---|---|---|---|---|---|---|---|---|---|---|---|
| Normal properties JIS No. 6 dumbbell 23°C 50RH% CHS: 200 mm/min | M100[MPa] | 1.21 | 1.18 | 1.15 | 1.18 | 0.84 | 0.79 | 0.71 | 0.87 | 0.87 | 0.76 | 0.78 | 1.16 | 0.81 |
| | T_{B} [MPa] | 17.81 | 18.57 | 17.03 | 18.19 | 18.12 | 16.02 | 13.98 | 20.40 | 15.53 | 17.18 | 16.05 | 18.73 | 17.98 |
| | E_{B} [%] | 750 | 750 | 830 | 750 | 1195 | 1230 | 1280 | 1150 | 1105 | 1240 | 1150 | 780 | 1065 |

**Table 2 (continued)**

| 130°C × 10 min | | Example 1 | Example 2 | Example 3 | Example 4 | Example 5 | Example 6 | Example 7 | Example 8 | Example 9 | Example 10 | Example 11 | Comparative Example 1 | Comparative Example 2 |
|---|---|---|---|---|---|---|---|---|---|---|---|---|---|---|
| Normal properties JIS No. 6 dumbbell 23°C 50RH% CHS: 200 mm/min | M100[MPa] | - | - | - | - | 0.84 | 0.80 | 0.78 | 0.86 | 0.87 | 0.83 | 0.80 | - | 0.85 |
| | T_{B} [MPa] | - | - | - | - | 16.88 | 13.84 | 12.16 | 17.10 | 12.00 | 15.42 | 7.74 | - | 18.08 |
| | E_{B} [%] | - | - | - | - | 1255 | 1250 | 1270 | 1230 | 1150 | 1240 | 1025 | - | 1135 |

No significant difference in physical property tendencies were observed in the molded bodies formed from the compositions obtained in each of Examples 1 to 4 and Comparative Example 1. This can conclude that when the thiol compound (B) was used in the system including zinc dibutyldithiocarbamate, a film having physical properties equal to or greater than the case where a crosslinking accelerator (for example, 1,3-diphenylthiourea) having a comparatively high environmental load can be formed.

No significant difference in physical property tendencies were observed in the molded bodies formed from the compositions obtained in each of Examples 5 to 11 and Comparative Example 2. Consequently, a film having physical properties equal to or greater than the case where a crosslinking accelerator having a comparatively high environmental load is used can be formed by using the thiol compound (B) in place of the crosslinking accelerator (for example, 1,3-diphenylthiourea) having a comparatively high environmental load even in a system free of zinc dibutyldithiocarbamate.

## Claims

1. A latex composition comprising a chloroprene polymer (A) and a thiol compound (B) having 2 or more mercapto groups in a molecule, wherein the thiol compound (B) has 2 or more partial structures represented by CH₃(SH)CHCH₂COOCH₂- in a molecule.

2. The latex composition according to claim 1, wherein the chloroprene polymer (A) is at least one selected from a homopolymer of chloroprene and a copolymer of chloroprene and an additional monomer copolymerizable with the chloroprene.

3. The latex composition according to claim 2, wherein a proportion of the additional monomer in the monomers used for forming the chloroprene polymer (A) is 30 mass% or less.

4. The latex composition according to any one of claims 1 to 3, wherein the thiol compound (B) has a primary mercapto group or a secondary mercapto group.

5. The latex composition according to any one of claims 1 to 4, wherein the thiol compound (B) has 2 to 10 mercapto groups in a molecule.

6. The latex composition according to any one of claims 1 to 5, wherein the thiol compound (B) is at least one selected from 1,4-bis(3-mercaptobutyryloxy)butane, 1,3,5-tris(2-(3-sulfanylbutanoyloxy)ethyl)-1,3,5-triazinane-2,4,6-trione, pentaerythritol tetrakis(3-mercaptobutylate), and trimethylolpropane tris(3-mercaptobutylate).

7. The latex composition according to any one of claims 1 to 6, further comprising a metal oxide.

8. The latex composition according to claim 7, wherein the metal oxide is zinc oxide.

9. The latex composition according to any one of claims 1 to 8, wherein a content of the thiol compound (B) is 0.05 to 20 parts by mass per 100 parts by mass of a content of the chloroprene polymer (A).

10. A molded body formed by using the latex composition according to any one of claims 1 to 9.

11. A method for producing a molded body comprising heating the latex composition according to any one of claims 1 to 9.

## Patentansprüche

1. Latexzusammensetzung, umfassend ein Chloroprenpolymer (A) und eine Thiolverbindung (B) mit 2 oder mehr Mercaptogruppen in einem Molekül, wobei die Thiolverbindung (B) 2 oder mehr durch CH₃(SH)CHCH₂COOCH₂-dargestellte Teilstrukturen in einem Molekül aufweist.

2. Latexzusammensetzung nach Anspruch 1, wobei das Chloroprenpolymer (A) mindestens eines ist, das ausgewählt ist unter einem Homopolymer von Chloropren und einem Copolymer von Chloropren und einem zusätzlichen Monomer, das mit dem Chloropren copolymerisierbar ist.

3. Latexzusammensetzung nach Anspruch 2, wobei der Anteil des zusätzlichen Monomers an den zur Bildung des Chloroprenpolymers (A) verwendeten Monomeren 30 Massenprozent oder weniger beträgt.

4. Latexzusammensetzung nach einem der Ansprüche 1 bis 3, wobei die Thiolverbindung (B) eine primäre Mercaptogruppe oder eine sekundäre Mercaptogruppe aufweist.

5. Latexzusammensetzung nach einem der Ansprüche 1 bis 4, wobei die Thiolverbindung (B) 2 bis 10 Mercaptogruppen in einem Molekül aufweist.

6. Latexzusammensetzung nach einem der Ansprüche 1 bis 5, wobei die Thiolverbindung (B) mindestens eine ist, die unter 1,4-Bis(3-mercaptobutyryloxy)butan, 1,3,5-Tris(2-(3-sulfanylbutanoyloxy)ethyl)-1,3,5-triazinan-2,4,6-trion, Pentaerythritol-tetrakis(3-mercaptobutylat) und Trimethylolpropan-tris(3-mercaptobutylat) ausgewählt ist.

7. Latexzusammensetzung nach einem der Ansprüche 1 bis 6, die außerdem ein Metalloxid enthält.

8. Latexzusammensetzung nach Anspruch 7, wobei das Metalloxid Zinkoxid ist.

9. Latexzusammensetzung nach einem der Ansprüche 1 bis 8, wobei der Gehalt der Thiolverbindung (B) 0,05 bis 20 Masseteile pro 100 Masseteile des Gehalts des Chloroprenpolymers (A) beträgt.

10. Formkörper, gebildet unter Verwendung der Latexzusammensetzung nach einem der Ansprüche 1 bis 9.

11. Verfahren zur Herstellung eines Formkörpers, umfassend das Erwärmen der Latexzusammensetzung nach einem der Ansprüche 1 bis 9.

## Revendications

1. Composition de latex comprenant un polymère de chloroprène (A) et un composé thiol (B) possédant 2 groupes mercapto ou plus dans une molécule, dans laquelle le composé thiol (B) possède 2 structures partielles ou plus représentées par CH₃(SH)CHCH₂COOCH₂-dans une molécule

2. Composition de latex selon la revendication 1, dans laquelle le polymère de chloroprène (A) est au moins un polymère choisi parmi un homopolymère de chloroprène et un copolymère de chloroprène et un monomère supplémentaire copolymérisable avec le chloroprène.

3. Composition de latex selon la revendication 2, dans laquelle une proportion du monomère supplémentaire dans les monomères utilisés pour former le polymère de chloroprène (A) est de 30 % en masse ou moins.

4. Composition de latex selon l'une quelconque des revendications 1 à 3, dans laquelle le composé thiol (B) possède un groupe mercapto primaire ou un groupe mercapto secondaire.

5. Composition de latex selon l'une quelconque des revendications 1 à 4, dans laquelle le composé thiol (B) possède 2 à 10 groupes mercapto dans une molécule.

6. Composition de latex selon l'une quelconque des revendications 1 à 5, dans laquelle le composé thiol (B) est au moins un composé choisi parmi le 1,4-bis(3-mercaptobutyryloxy)butane, le 1,3,5-tris(2-(3-sulfanylbutanoyloxy)éthyl)-1,3,5-triazinane-2,4,6-trione, le tétrakis(3-mercaptobutylate) de pentaérythritol et le tris(3-mercaptobutylate) de triméthylolpropane.

7. Composition de latex selon l'une quelconque des revendications 1 à 6, comprenant en outre un oxyde métallique

8. Composition de latex selon la revendication 7, dans laquelle l'oxyde métallique est l'oxyde de zinc.

9. Composition de latex selon l'une quelconque des revendications 1 à 8, dans laquelle la teneur en composé thiol (B) est de 0,05 à 20 parties en masse pour 100 parties en masse de la teneur en polymère de chloroprène (A).

10. Corps moulé formé en utilisant la composition de latex selon l'une quelconque des revendications 1 à 9.

11. Procédé de production d'un corps moulé comprenant le chauffage de la composition de latex selon l'une quelconque des revendications 1 à 9.
